# EUROPEAN PATENT SPECIFICATION

(11) **EP 1 439 102 B1**
(45) Date of publication and mention of the grant of the patent: **17.05.2006**
(21) Application number: 04075113.3
(22) Date of filing: 16.01.2004
(51) Int. Cl.: B60T 7/10, B60T 13/74

(54) **Apparatus and method for controlling an electric park brake**
Einrichtung und Verfahren für die Bedienung einer elektrischen Parkbremse
Dispositif et méthode pour actionner un frein de stationnement

(30) Priority: 17.01.2003 US 346391
(43) Date of publication of application: 21.07.2004
(73) Proprietor: Delphi Technologies, Inc., Troy, MI 48007 (US)
(72) Inventor: Alvarez, Belen, 75015 Paris (FR); Groult, Xavier Marie, 95470 Survilliers (FR); Zumberge, Jon Tomas, Dayton, OH 45449 (US)
(74) Representative: Denton, Michael John

(56) References cited:
- DE-A- 19 826 687
- DE-C- 10 006 656
- US-A- 5 499 866

## Description

### TECHNICAL FIELD

The present invention relates to an apparatus for braking a motor which according to the preamble of claim 1 and to a method of controlling an electric parking brake.

### BACKGROUND OF THE INVENTION

Document DE-A-198 26 687 discloses the preamble of claim 1 and in combination the following features of method claim 8:

A method of controlling an electric parking brake of a motor vehicle having at least two wheels, the method comprising:
determining whether an electric paking brake switch is actuated,
determining whether the vehicle is moving,
determining whether there is a failure of a brake pedal,
if the parking brake switch is actuated and if there is no failure of the brake pedal, then applying a first braking force to one of the wheels and applying a second braking force to the other of the wheels.

A brake system for a motor vehicle, and in particular an automotive vehicle, functionally reduces the speed of the vehicle or maintains the vehicle in a rest position. Various types of brake systems are commonly used in automotive vehicles, including hydraulic, anti-lock or "ABS," and electric or "brake by wire." Examples of vehicle brake systems are shown in U.S. Patent Application Publication US 2001/0029408 and U.S. Patent Application Publication US 2001/0032042, the disclosures of which are hereby incorporated by reference. In a hydraulic brake system, the hydraulic fluid transfers energy from a brake pedal to a brake pad for slowing down or stopping rotation of a wheel of the vehicle. Electronics control the hydraulic fluid in the hydraulic brake system. In the electric brake system, the hydraulic fluid is eliminated. Instead, the application and release of the brake pad is controlled by an electric caliper.

Typically, the parking brake function of a vehicle takes the form of a manually operated brake in which the amount of parking brake force is regulated by the vehicle operator. When this form of parking brake is operated while the vehicle is moving, excessive slip of the braked wheels leading to a wheel lockup condition may be avoided by the vehicle operator by consciously avoiding application of parking brake force giving rise to an excessive slip condition. However, this is difficult in view of the fact that when the critical slip value producing a peak braking effort is exceeded, the braked wheel rapidly decelerates toward lockup.

It has been proposed to automatically apply the parking brake in response to the actuation of a switch by the vehicle operator. In one such system, the brake pressure is controlled, when the switch is operated while the vehicle is moving, to establish a target vehicle deceleration until the vehicle stops after which the brake pressure is increased to maintain maximum braking force. In this form of parking brake system, an excessive slip condition will result if the target vehicle deceleration cannot be achieved on the particular road surface. For example, if the road surface coefficient of friction is low such as when the road surface is covered with ice, the maximum achievable vehicle deceleration is low. If the target vehicle deceleration is greater than this maximum possible vehicle deceleration, the brake pressure controlled in an attempt to achieve this target vehicle deceleration will result in the critical slip being exceeded and the wheel being decelerated toward lockup. To avoid this condition by setting a low target vehicle deceleration results in a lower than possible deceleration on higher coefficient of friction surfaces. One attempt to address this situation is disclosed in U.S. Patent No. 5,139,315.

Further state of the art related to the technical field of the invention can be found in DE 198 26 687, DE 100 06 656, and US 5,499,866.

DE 198 26 687 relates to an electrically operable brake system and a method for its actuation. The brake system and the method are characterized in that the service brake system can be activated by two brake operating devices which are operable by the driver independently of each other. The main advantage which results is that upon failure of a brake operating device which is e.g. configured as a brake pedal module, braking of the vehicle can be achieved by means of the service brake system by way of the second brake operating device. The redundant design of the actuation for the service brake permits achieving a high degree of operational safety because full braking functions can be maintained even in case of emergency braking.

DE 100 06 656 shows a parking brake system for a motor vehicle having a control for activating the parking brake, an electrical parking brake control unit for controlling braking devices which are assigned to the parking brake, a brake booster function control unit for controlling brake booster functions which promote traveling comfort and safety. When the control is activated at a vehicle velocity above a predefined minimum velocity, the braking devices assigned to the service brake are controlled by the brake booster function control unit.

US 5,499,866 is concerned with a device for monitoring an automatic braking process by using a testing method which takes place via an automatic braking process lasting only briefly, typically about 50ms. The test method is initiated by a test control device and can take place during various vehicle states. If operational faults are detected this is indicated to the driver and execution of an automatic braking process may be prevented.

### SUMMARY OF THE INVENTION

The present invention is an apparatus for braking a motor vehicle having a wheel. The apparatus comprises a parking brake switch and a brake. The parking brake switch is actuatable by an operator. The brake is in electrical communication with the parking brake switch, and is adapted to apply a first braking force to the wheel when the parking brake switch is actuated and the vehicle is traveling at a first speed. The apparatus further comprises a second brake in electrical communication with the parking brake switch, the second brake being adapted
to apply a second braking force to the other wheels when the parking brake switch is actuated and
to apply a third braking force to the other wheels if the first brake is not operable. The present invention also provides a method of controlling an electric parking brake of a motor vehicle having at least two wheels.

Accordingly, it is an object of the present invention to provide an apparatus of the type described above that adjusts a parking brake deceleration as a function of the speed of the vehicle.

Another object of the present invention is to provide an assembly of the type described above that varies brake torque among the wheel brakes in the event of a failure of one wheel brake.

Another object of the present invention is to provide an assembly of the type described above that applies a second braking force to the wheel when the parking brake switch is actuated and the vehicle is traveling at a second speed.

Still another object of the present invention is to provide both a system and a method of braking that facilitates the comfort of the operator of the motor vehicle.

These and other features and advantages of the invention will become further apparent from the following detailed description of the presently preferred embodiments, read in conjunction with the accompanying drawings. The detailed description and drawings are merely illustrative of the invention rather than limiting, the scope of the invention being defined by the appended claims and equivalents thereof.

### BRIEF DESCRIPTION OF THE DRAWINGS

FIG. 1 is a diagram of a wheel braking system including an electronic controller for controlling the vehicle brakes to apply parking brake pressure; and
FIG. 2 is a flow diagram illustrating the operation of the electronic controller according to the present invention.

### DETAILED DESCRIPTION OF THE PREFERRED EMBODIMENT

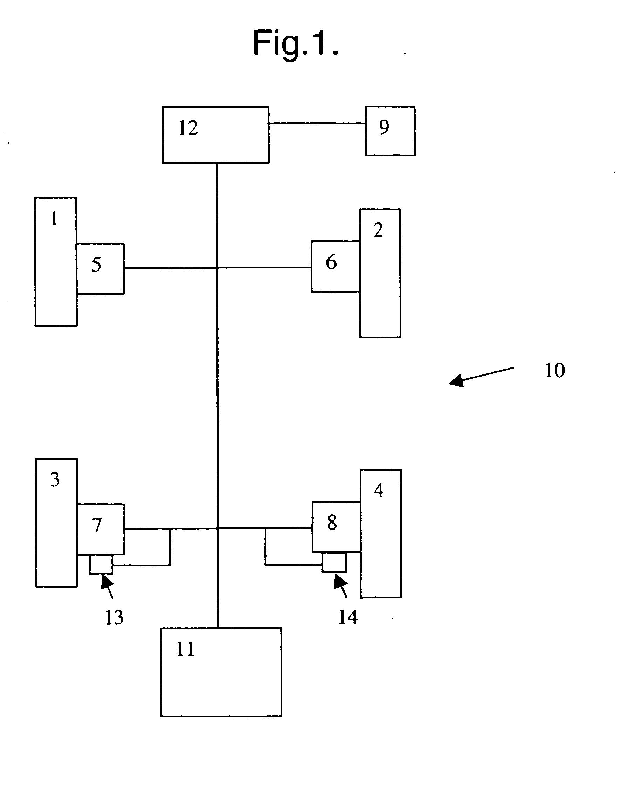

FIG. 1 shows one embodiment 10 of a vehicle braking system in which application of a force F to a brake pedal of a brake pedal emulator system 12 that determines driver intention. The brake pedal emulator system 12 may include a park brake switch 9 and a combination of a brake switch, a pedal travel transducer, and/or a force transducer. Further details of one such system are described in U.S. Patent No. 6,367,886.

All four wheels 1, 2, 3, and 4 are illustrated in FIG. 1. In a preferred embodiment, the wheels 1, 2, 3, and 4 include electrically operated brake actuators 5, 6, 7, and 8 that actuate a caliper operating on a conventional disc. The electric brake actuator 5, 6, 7, and 8 are controlled by an electronic control unit (ECU) 11. Each brake actuator 5, 6, 7, and 8 also includes a sensor set, diagnostic capabilities, and power electronic capabilities to inform the controller 11 of its status. During normal vehicle braking, the controller 11 responds to the force applied to the brake pedal 12 by the vehicle operator as measured by the force transducer and/or the travel transducer, and controls the force to the brake actuators 5, 6, 7 and 8 so as to establish a braking force proportional to the force applied by the operator to the brake pedal.

The ECU 11 also controls park brake actuators 13 and 14, preferably as described in U.S. Patent No. 6,401,879. When the driver desires to latch the park brake, the actuators 13 and 14 maintain the current force level. In an alternative embodiment, the ECU 11 may be located at each wheel to directly control an associated motor. It should also be appreciated that park brake actuators may be located on the front wheels 1 and 2 in lieu of or in addition to the park brake actuators for the rear wheels of the vehicle. The ECU 11 further may communicate with a supervisory controller to determine the amount of force that needs to be applied to the wheel in the case of an ABS event. In response to the various input signals, the ECU 11 controls the voltage to the motors of the electric brakes to provide controlled parking brake force when commanded by the vehicle operator.

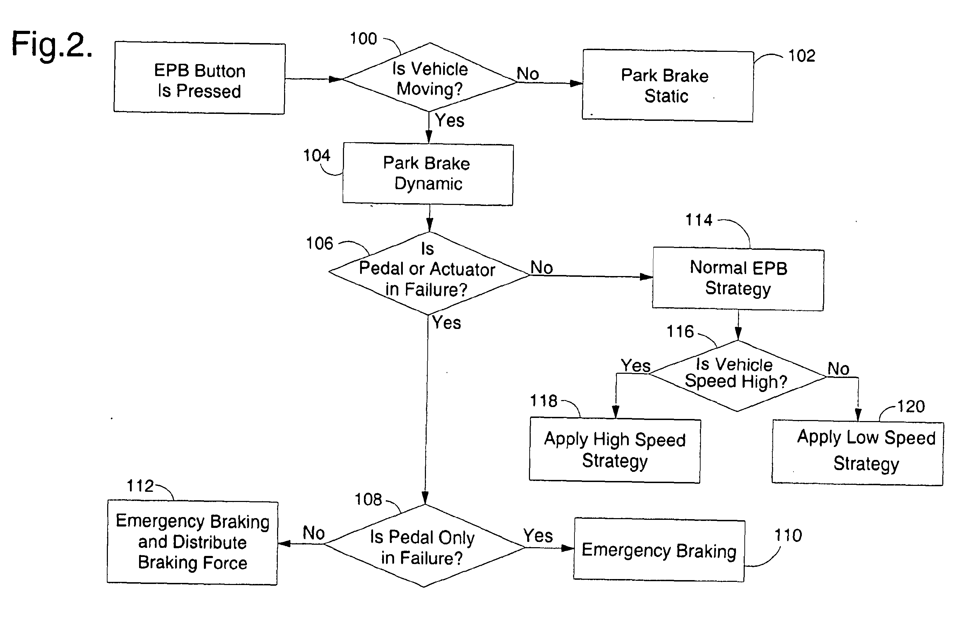

To provide an electric parking brake (EPB) function, the park brake switch 9 within the pedal input module 12 is used. The park brake switch 9 may be mounted on the dash of the vehicle, and actuated by the operator to initiate or disable the parking brake function. FIG. 2 shows a method by which the EPB may be controlled. At block 100, the method asks whether the vehicle is moving or not after the EPB button is pressed. When the vehicle is static as shown at block 102, i.e. not in motion, the commanded forces are normally constant and are not dependent on anything.

If the vehicle is rolling, the method enters a dynamic mode as shown at block 104. The method preferably first determines as shown at block 106 whether there is a failure of the brake pedal or more generally of the brake pedal module 12, or a failure of a brake actuator 5, 6, 7, or 8. If the controller determines at block 108 that there is a failure of the brake pedal module only, then the controller institutes an emergency braking strategy as shown at block 110. The determination that there is pedal module failure may be made when the pedal sensors that normally command the brakes are in failure, or give insufficient or non-coherent information to interpret a brake request. If the failure is not of the brake pedal only, then the controller institutes a distributed emergency braking strategy as shown at block 112.

If at block 106 the controller determines that there is no brake pedal or actuator failure, then the system institutes a normal EPB strategy at block 114. This normal EPB strategy assumes that the driver wants to slow the vehicle in a non-emergency manner, i.e. one with a relatively low deceleration level. The system then determines whether the vehicle is traveling at a relatively high rate of speed as shown at block 116. If the vehicle is traveling relatively fast, then the system at block 118 applies a high speed strategy. If the vehicle is traveling relatively slowly, then the system at block 120 applies a low speed strategy.

In either the high speed or low speed strategy, the initial EPB braking forces preferably increase at a constant rate over a duration in the range of about 1.4 to 1.5 seconds, although the rate of increase may be greater for the high speed strategy. After that, the braking forces are kept constant as long as the vehicle is moving and as long as the driver is pushing the EPB button. At low vehicle speeds, for example around 20 kilometers per hour (kph), the system thereafter develops a steady state deceleration level in the range of about 2.5 m/s². For the higher vehicle speeds, the system develops a steady state deceleration level the value of which increases at higher vehicle speeds. In one embodiment of the present invention, this high speed deceleration level is in the range of about 8 m/s² at 100 kph. The deceleration target between 20 and 100 kph is preferably proportional to the vehicle speed when the EPB button is pressed.

For the emergency braking case 110, the system assumes that the driver wants to stop the vehicle as quickly as possible, without regard to comfort. The system therefore develops a relatively high initial rate for a duration less than about 0.5 seconds. The system thereafter applies a relatively high steady state deceleration that may be in the range of about 8 to 11 m/s² for high µ. The target deceleration in this case is the maximum attainable deceleration for the given road friction, and ABS regulation is forced and active. For the emergency braking scenario 112, the desired deceleration is achieved by distributing the braking forces among the available actuators in order to facilitate lateral control.

If ABS is active on the vehicle, then the braking forces follow ABS control. When the driver releases the EPB button, the braking forces are released relatively quickly, preferably over about 0.2 seconds. If the vehicle thereafter comes to rest, the front brakes may be released, and the rear brakes may be allowed to enter the static mode. Finally, it should be appreciated that the desired deceleration levels may be achieved with different braking forces at the front and rear wheels.

While the embodiment of the invention disclosed herein is presently considered to be preferred, various changes and modifications can be made without departing from the spirit and scope of the invention. For example, the system 10 may also implement dynamic rear proportioning (DRP) for front-to-rear balance, corner braking (CBD) for left-to-right balance during braking in a turn, and ABS in addition to base braking and EPB.

## Claims

1. Apparatus for braking a motor vehicle having at least two wheels (3, 4), the apparatus comprising:
a parking brake switch (9) actuatable by an operator;
a first brake (13) in electrical communication with the parking brake switch (9), the first brake being adapted to apply a first braking force to one of the wheels (3, 4) when the parking brake switch (9) is actuated; and
a second brake (14) in electrical communication with the parking brake switch (9), **characterized in that** the second brake is adapted
to apply a second braking force to the other of the wheels (3, 4) when the parking brake switch (9) is actuated, and
to apply a third braking force to the other of the wheels (3, 4) if the first brake is not operable.

2. The apparatus of claim 1 further comprising a controller (11) in communication with the parking brake switch (9) and in communication with the first and second brakes.

3. The apparatus of any one of the preceding claims wherein the third braking force is greater than the second braking force.

4. The apparatus of any one of the preceding claims wherein the first and second braking forces are released when the operator releases the parking brake switch (9).

5. The apparatus of any one of the preceding claims wherein the brake is adapted
to apply a first braking force at least one of said wheels (3, 4) when the parking brake switch (9) is actuated and the vehicle is traveling at a first speed, and
to apply a second braking force at least one of said wheels (3, 4) when the parking brake switch (9) is actuated and the vehicle is traveling at a second speed.

6. The apparatus of claim 5 further comprising a controller (11) in communication with the parking brake switch (9) and in communication with the brake.

7. The apparatus of claim 5 wherein the first speed is greater than the second speed, and the first force is greater than the second force.

8. A method of controlling an electric parking brake of a motor vehicle having at least two wheels (3, 4), the method comprising:
determining whether an electric parking brake switch (9) is actuated;
determining whether the vehicle is moving;
determining whether there is a failure of a brake pedal (12) or a brake actuator;
if the parking brake switch (9) is actuated and if there is no failure of the brake pedal (12), then applying a first braking force to one of the wheels (3, 4) and applying a second braking force to the other of the wheels (3, 4)
and applying a third braking force to the other of the wheels (3, 4) if there is a failure of a brake actuator.

9. The method of claim 8 wherein the first and second braking forces depend on a speed of the vehicle.

10. The method of claim 8 further comprising applying a third braking force to the other of the wheels if there is a failure of the brake pedal.

11. The method of claim 8 wherein the third braking force is greater than the second braking force.

12. The method of claim 8 further comprising releasing the first and second braking forces when the parking brake switch (9) is released.

## Patentansprüche

1. Vorrichtung zum Bremsen eines Kraftfahrzeugs mit mindestens zwei Rädern (3, 4), wobei die Vorrichtung umfasst:
einen Parkbremsschalter (9), der von einem Fahrer betätigt werden kann;
eine erste Bremse (13) in elektrischer Verbindung mit dem Parkbremsschalter (9), wobei die erste Bremse dafür eingerichtet sein kann, eine erste Bremskraft an eines der Räder (3, 4) anzulegen, wenn der Parkbremsschalter (9) betätigt wird; und
eine zweite Bremse (14) in elektrischer Verbindung mit dem Parkbremsschalter (9),
**dadurch gekennzeichnet,**
**dass**
die zweite Bremse dafür eingerichtet ist, eine zweite Bremskraft an das andere der Räder (3, 4) anzulegen, wenn der Parkbremsschalter (9) betätigt wird, und
eine dritte Bremskraft an das andere der Räder (3, 4) anzulegen, falls die erste Bremse nicht betätigt werden kann.

2. Vorrichtung nach Anspruch 1, ferner mit
einem Controller (11) in Verbindung mit dem Parkbremsschalter (9) und in Verbindung mit der ersten und zweiten Bremse.

3. Vorrichtung nach einem der vorhergehenden Ansprüche,
wobei die dritte Bremskraft größer als die zweite Bremskraft ist.

4. Vorrichtung nach einem der vorhergehenden Ansprüche,
wobei die erste und zweite Bremskraft gelöst werden, wenn der Fahrer den Parkbremsschalter (9) loslässt.

5. Vorrichtung nach einem der vorhergehenden Ansprüche, wobei die Bremse dafür eingerichtet ist,
eine erste Bremskraft an zumindest eines der Räder (3, 4) anzulegen, wenn der Parkbremsschalter (9) betätigt wird und das Fahrzeug mit einer ersten Geschwindigkeit fährt, und
eine zweite Bremskraft an zumindest eines der Räder (3, 4) anzulegen, wenn der Parkbremsschalter (9) betätigt wird und das Fahrzeug mit einer zweiten Geschwindigkeit fährt.

6. Vorrichtung nach Anspruch 5, ferner mit
einem Controller (11) in Verbindung mit dem Parkbremsschalter (9) und in Verbindung mit der Bremse.

7. Vorrichtung nach Anspruch 5,
wobei die erste Geschwindigkeit höher als die zweite Geschwindigkeit und die erste Kraft größer als die zweite Kraft ist.

8. Verfahren zum Steuern einer elektrischen Parkbremse eines Kraftfahrzeugs mit mindestens zwei Rädern (3, 4), wobei das Verfahren umfasst:
Bestimmen, ob ein elektrischer Parkbremsschalter (9) betätigt wird; Bestimmen, ob sich das Fahrzeug gerade bewegt;
Bestimmen, ob eine Störung eines Bremspedals (12) oder eines Bremsstellglieds vorliegt;
falls der Parkbremsschalter (9) betätigt ist und falls keine Störung des Bremspedals (12) vorliegt, dann Anlegen einer ersten Bremskraft an eines der Räder (3, 4) und Anlegen einer zweiten Bremskraft an das andere der Räder (3, 4), und
Anlegen einer dritten Bremskraft an das andere der Räder (3, 4), falls eine Störung eines Bremsstellglieds vorliegt.

9. Verfahren nach Anspruch 8,
wobei die erste und zweite Bremskraft von einer Geschwindigkeit des Fahrzeugs abhängen.

10. Verfahren nach Anspruch 8, ferner aufweisend den Schritt:
Anlegen einer dritten Bremskraft an das andere der Räder, falls eine Störung des Bremspedals vorliegt.

11. Verfahren nach Anspruch 8,
wobei die dritte Bremskraft größer als die zweite Bremskraft ist.

12. Verfahren nach Anspruch 8, ferner aufweisend den Schritt:
Lösen der ersten und zweiten Bremskraft, wenn der Parkbremsschalter (9) losgelassen wird.

## Revendications

1. Dispositif pour freiner un véhicule à moteur ayant au moins deux roues (3, 4), le dispositif comprenant :
un commutateur de frein de stationnement (9) qui peut être actionné par un opérateur
un premier frein (13) en communication électrique avec le commutateur de frein de stationnement (9), le premier frein étant prévu pour appliquer une première force de freinage à l'une des roues (3, 4) lorsque le commutateur de frein de stationnement (9) est actionné ; et
un deuxième frein (14) en communication électrique avec le commutateur de frein de stationnement (9), **caractérisé en ce que** le deuxième frein est prévu
pour appliquer une deuxième force de freinage à l'autre des roues (3, 4) lorsque le commutateur de frein de stationnement (9) est actionné, et
pour appliquer une troisième force de freinage à l'autre des roues (3, 4) si le premier frein ne peut pas fonctionner.

2. Dispositif selon la revendication 1, comprenant en outre un organe de commande (11) en communication avec le commutateur de frein de stationnement (9) et en communication avec les premier et deuxième freins.

3. Dispositif selon l'une quelconque des revendications précédentes dans lequel la troisième force de freinage est supérieure à la deuxième force de freinage.

4. Dispositif selon l'une quelconque des revendications précédentes dans lequel les première et deuxième forces de freinage sont libérées lorsque l'opérateur libère le commutateur de frein de stationnement (9).

5. Dispositif selon l'une quelconque des revendications précédentes dans lequel le frein est prévu
pour appliquer une première force de freinage à au moins une desdites roues (3, 4) lorsque le commutateur de frein de stationnement (9) est actionné et que le véhicule roule à une première vitesse, et
pour appliquer une deuxième force de freinage à au moins une desdites roues (3, 4) lorsque le commutateur de frein de stationnement (9) est actionné et que le véhicule roule à une deuxième vitesse.

6. Dispositif selon la revendication 5, comprenant en outre un organe de commande (11) en communication avec le commutateur de frein de stationnement (9) et en communication avec le frein.

7. Dispositif selon la revendication 5, dans lequel la première vitesse est supérieure à la deuxième vitesse, et la première force est supérieure à la deuxième force.

8. Procédé pour commander un frein de stationnement électrique d'un véhicule à moteur ayant au moins deux roues (3, 4), le procédé consistant à :
déterminer si un commutateur électrique de frein de stationnement (9) est ou non actionné ;
déterminer si le véhicule se déplace ou non ;
déterminer s'il y a ou non un disfonctionnement d'une pédale de frein (12) ou d'une commande de frein ;
si le commutateur de frein de stationnement (9) est actionné et s'il n'y a pas de disfonctionnement de la pédale de frein (12), appliquer une première force de freinage à l'une des deux roues (3, 4) et appliquer une deuxième force de freinage à l'autre des roues (3, 4)
et appliquer une troisième force de freinage à l'autre des roues (3, 4) s'il y a un disfonctionnement d'un actionneur de frein.

9. Procédé selon la revendication 8 dans laquelle les première et deuxième forces de freinage dépendent de la vitesse du véhicule.

10. Procédé selon la revendication 8 consistant en outre à appliquer une troisième force de freinage à l'autre des roues s'il y a un disfonctionnement de la pédale de frein.

11. Procédé selon la revendication 8 dans laquelle la troisième force de freinage est supérieure à la deuxième force de freinage.

12. Procédé selon la revendication 8 consistant en outre à relâcher les première et deuxième forces de freinage lorsque le commutateur de frein de stationnement (9) est libéré.
